# EUROPÄISCHE PATENTSCHRIFT

(11) **EP 3 977 681 B1**
(45) Veröffentlichungstag und Bekanntmachung des Hinweises auf die Patenterteilung: **31.12.2025**
(21) Anmeldenummer: 20754631.8
(22) Anmeldetag: 22.07.2020
(51) Int. Cl.: H04L 43/0817, H04L 43/50, H04L 41/0677

(54) **ÜBERTRAGUNGSVORRICHTUNG ZUM ÜBERTRAGEN VON DATEN**
TRANSMISSION DEVICE FOR TRANSMITTING DATA
DISPOSITIF DE TRANSMISSION POUR LA TRANSMISSION DE DONNÉES

(30) Priorität: 30.07.2019 DE 102019211290
(43) Veröffentlichungstag der Anmeldung: 06.04.2022
(73) Patentinhaber: Siemens Mobility GmbH, 80997 München (DE)
(72) Erfinder: BAUER, Christian, 80339 München (DE); WIMMER, Martin, 85579 Neubiberg (DE); FALK, Rainer, 85586 Poing (DE); SEIFERT, Matthias, 21244 Buchholz (DE)
(74) Vertreter: Siemens Patent Attorneys
(86) Internationale Anmeldenummer: PCT/EP2020/070714
(87) Internationale Veröffentlichungsnummer: WO 2021/018697

(56) Entgegenhaltungen:
- US-A1- 2015 256 825
- US-A1- 2019 007 220
- US-B1- 6 404 740
- US-B1- 9 160 644

## Beschreibung

Diese Anmeldung betrifft eine Übertragungsvorrichtung zum Übertragen von Daten zwischen einem ersten Netzwerk und einem zweiten Netzwerk.

Zur sicheren Kommunikation zwischen einem sicherheitskritischen Netzwerk, wie z.B. einem industriellen Steuerungsnetzwerk (engl. Industrial Control network) oder einem Bahnsicherungsnetzwerk, und einem offenen Netzwerk, wie z.B. einem IT-Netzwerk, welches vorzugsweise als ein Büronetzwerk oder ein Diagnosenetzwerk ausgebildet ist, können beispielsweise Einwegkommunikationseinheiten, wie z.B. Datendioden, eingesetzt werden, um eine unidirektionale Datenübertragung zu ermöglichen.

Eine Datendiode mit einem Feedbackkanal wird auch als bidirektionaler Network Guard oder Security Gateway bezeichnet.

Eine solche Datendiode ermöglicht einen sicheren Datentransfer zwischen zwei Informationsbereichen mit unterschiedlichen Sicherheitsstufen. Ein entsprechender Network Guard ist in der Regel eine Kombination aus Hardware und Software.

Ein bidirektionaler Network Guard ist grundsätzlich derart aufgebaut, dass zwei voneinander getrennte unidirektionale Datenströme jeweils mittels einer Einwegkommunikationseinrichtung realisiert werden, wobei die Datenströme in entgegengesetzte Richtungen fließen. Dies erlaubt einen Datenaustausch in beide Richtungen, wobei jeweils die Einwegfunktion gewährleistet ist. Beispielsweise können mit einem bidirektionalen Network Guard Daten aus einem Netzwerk mit hoher Sicherheitsanforderung in ein offenes Netzwerk mit geringer Sicherheitsanforderung bzw. vom Netzwerk mit geringer Sicherheitsanforderung an ein Netzwerk mit hoher Sicherheitsanforderung übermittelt werden.

Jedoch ist unter bestimmten Voraussetzungen eine Manipulation dieser bidirektionalen Network Guards möglich und/oder beim Betrieb des bidirektionalen Network Guards können Fehler auftreten.

Darüber hinaus soll der Network Guard sicherstellen, dass vom Netzwerk mit geringer Sicherheitsanforderung keine beliebigen Daten an das Netzwerk mit hoher Sicherheitsanforderung übermittelt werden können.

Aus diesem Grund implementiert der Network Guard dafür Prüfungsmechanismen, um nur freigegebene oder speziell markierte Daten für die Übertragung aus dem Netzwerk mit geringer Sicherheitsanforderung in das Netzwerk mit hoher Sicherheitsanforderung zuzulassen.

Das impliziert, dass der Network Guard gegenüber Angriffen aus dem Netzwerk mit geringer Sicherheitsanforderung abgesichert sein muss.

In der US 6 404 740 B1 wird ein System zum Testen der internen Konnektivität in einem ATM Switch mit mehreren Subsystemen beschrieben. Dazu werden existierende "Loopback OAM Zelle" mit einer Kennung des jeweils zu testenden Subsystems ergänzt und von einem Sender an den ATM Switch zur weiteren Übertragung durch die einzelnen Subsysteme übergeben. Die Kennung der "Loopback OAM Zelle" wird in den aufeinanderfolgenden Subsystemen überprüft. Stimmt die eingetragene Kennung mit der Kennung des Subsystems überein, sendet dieses Subsystem die "Loopback OAM Zelle" an den Sender über die gleiche Verbindung zurück. Dadurch kann der Sender die Abgrenzung zwischen erreichbaren und nicht-erreichbaren Subsystemen überprüfen und somit eine Fehlerstelle lokalisieren.

In der US2019007220 A1 wird die Kopplung einer Sicherheitsvorrichtung, die ein Hardware-Sicherheitsmodul (HSM) ist, mit einem Gerät beschrieben. Dazu wird ein einmalig verwendbarer privater Signierschlüssel und gerätespezifischen Identifikationsinformationen in der Sicherheitsvorrichtung gespeichert. Das gerätespezifische Gerätezertifikat wird in Abhängigkeit von den gespeicherten gerätespezifischen Identifikationsinformationen in der Sicherheitseinrichtung erzeugt und mit dem privaten Signierschlüssel signiert. Der weitere Zugriff auf den privaten Signierschlüssel wird verhindert.

Vor diesem Hintergrund besteht eine Aufgabe der vorliegenden Erfindung darin, Mittel bereitzustellen, die Sicherheit bei der Übertragung von Daten durch die Übertragungsvorrichtung zwischen einem ersten Netzwerk und einem zweiten Netzwerk zu erhöhen.

Gemäß einem ersten Aspekt wird eine Übertragungsvorrichtung zum Übertragen von Daten zwischen einem ersten Netzwerk und einem zweiten Netzwerk gemäß unabhängigem Anspruch 1 vorgeschlagen.

Die bereitgestellte Übertragungsvorrichtung ist selbstständig dazu in der Lage bei einem Auftreten zumindest eines Fehlers in der Übertragungsvorrichtung, diesen zu detektieren und zu identifizieren sowie zu lokalisieren, in welchem Bauteil der Übertragungsvorrichtung und/oder zwischen welchen Bauteilen der Übertragungsvorrichtung dieser Fehler auftritt oder vorhanden ist. Im Detail kann hierbei jede Kommunikations- und Einwegkommunikationseinrichtung der Übertragungsvorrichtung selbständig testen, ob zumindest ein Fehler auf dem Übertragungsweg zwischen den einzelnen Kommunikations- und/oder Einwegkommunikationseinrichtungen oder in einer der Kommunikations- oder Einwegkommunikationseinrichtungen auftritt. Falls ein Fehler auftritt, kann jede Kommunikations- und Einwegkom-munikationseinrichtung selbstständig testen, in welchem Bauteil, also in welcher Kommunikations- oder Einwegkommunikationseinrichtung oder zwischen welchen Kommunikations- oder Einwegkommunikationseinrichtungen der Fehler auftritt. Ob ein Fehler auftritt und wo dieser lokalisiert ist wird insbesondere durch das Auswerten des Betriebszustandes der Übertragungsvorrichtung ermittelt.

Dies hat den Vorteil, dass bei einer Selbstüberprüfung der Übertragungsvorrichtung, beispielsweise beim Start, zuverlässig überprüft werden kann, ob die Übertragungsvorrichtung korrekt funktioniert. Falls ein Fehler detektiert wird, wird vorteilhafter Weise der Administrator oder der Benutzer der Übertragungsvorrichtung darüber informiert, welcher anschließend Maßnahmen zur Fehlerbehebung einleiten kann. Dies erhöht die Zuverlässigkeit und Sicherheit beim Betrieb der Übertragungsvorrichtung.

Ein weiterer Vorteil der Übertragungsvorrichtung ist, dass durch die automatische Fehlerlokalisierung der Übertragungsvorrichtung die Zeit für die Fehlersuche, falls ein Fehler in der Übertragungsvorrichtung auftritt, für den Administrator reduziert wird. Dies erhöht die Benutzerfreundlichkeit beim Betrieb der Übertragungsvorrichtung.

Ein weiterer Vorteil der Übertragungsvorrichtung ist, dass wenn die Selbstüberprüfung zentral von der ausgewählten einzigen Kommunikations- oder Einwegkommunikationseinrichtung durchgeführt wird, sich der interne Datenstrom zur Überprüfung ob ein Fehler vorliegt, insbesondere der Overhead bei der durch die Übertragungsvorrichtung übertragenen Daten, verringert. Dies erhöht die Zuverlässigkeit beim Betrieb der Übertragungsvorrichtung.

Ein weiterer Vorteil der Übertragungsvorrichtung ist, dass die Auswertung des Betriebszustandes, insbesondere die Daten die bei der Auswertung entstehen, geloggt und gespeichert werden, um diese dem Administrator oder Benutzer der Übertragungsvorrichtung bereitzustellen. Dadurch kann zu jedem Zeitpunkt nachvollzogen werden, welche Fehler wann und wo aufgetreten sind. Dies erhöht die Benutzerfreundlichkeit und verbessert die Fehlerkorrektur, da Maßnahmen, welche bei bereits aufgetretenen Fehlern eingeleitet wurden, schnell zur Verfügung stehen.

Die Übertragungsvorrichtung ist insbesondere als ein bidirektionaler Network Guard oder als ein Security Gateway ausgebildet. Der bidirektionale Network Guard ist vorzugsweise hardwaretechnisch und/oder softwaretechnisch implementiert.

Das erste Netzwerk umfasst insbesondere ein industrielles Steuerungsnetzwerk, wie eine Produktionsanlage, ein Automatisierungssystem oder ein Windparknetzwerk. Beispielsweise kann das erste Netzwerk durch eine erste Schnittstelleneinrichtung an die erste Kommunikationseinrichtung gekoppelt werden. Das zweite Netzwerk ist insbesondere ein IT-Netzwerk, welches als ein Büro- oder als ein Überwachungsnetzwerk ausgebildet ist.

Ein Fehler ist insbesondere eine defekte Kommunikations- oder Einwegkommunikationseinrichtung und/oder ein Bauteil innerhalb der Kommunikations- oder Einwegkommunikationseinrichtung. Weiterhin handelt es sich um einen Fehler, wenn ein interner Kommunikationslink (eine Verbindung) zwischen einer Kommunikationseinrichtung und einer Einwegkommunikationseinrichtung beispielsweise defekt ist.

Der interne Empfangsport und der interne Sendeport sind insbesondere hardwaretechnisch und/oder softwaretechnisch implementiert.

Insbesondere werden Daten, welche von dem ersten Netzwerk zu dem zweiten Netzwerk übertragen werden, von der ersten Kommunikationseinrichtung über die erste Einwegkommunikationseinrichtung zu der zweiten Kommunikationseinrichtung übertragen. Insbesondere werden Daten, die von dem zweiten Netzwerk zu dem ersten Netzwerk übertragen werden, von der zweiten Kommunikationseinrichtung über die zweite Einwegkommunikationseinrichtung zu der ersten Kommunikationseinrichtung übertragen.

Die Prüfnachricht ist insbesondere eine Nachricht. Unter einer Nachricht wird vorliegend insbesondere ein digitaler Datensatz, beispielsweise eine Folge von Nullen und Einsen, die auch als Bits bezeichnet werden, mit einer bestimmten Länge verstanden.

Wenn vorzugsweise eine über ihren internen Sendeport einer ausgewählten Kommunikations- oder Einwegkommunikationseinrichtung gesendete Prüfnachricht an dem internen Empfangsport der ausgewählten Kommunikations- oder Einwegkommunikationseinrichtung empfangen wird, kann ein Betriebszustand der Übertragungsvorrichtung, insbesondere der jeweiligen Kommunikations- und/oder Einwegkommunikationseinrichtung, ausgewertet werden.

Die jeweilige Einrichtung, zum Beispiel eine Kommunikationseinrichtung, Schnittstelleneinrichtung und/oder Einwegkommunikationseinrichtung, kann hardwaretechnisch und/oder auch softwaretechnisch implementiert sein. Bei einer hardwaretechnischen Implementierung kann die jeweilige Einrichtung als Vorrichtung oder als Teil einer Vorrichtung ausgebildet sein. Bei einer softwaretechnischen Implementierung kann die jeweilige Einrichtung als Computerprogrammprodukt, als eine Funktion, als eine Routine, als Teil eines Programmcodes oder als ausführbares Objekt ausgebildet sein.

Gemäß einer Ausführungsform ist zwischen einem jeweiligen internen Sendeport und einem jeweiligen internen Empfangsport ein interner physischer Kommunikationslink PHY angeordnet, welcher in einer Übertragungsschicht, Schicht 1, gemäß dem OSI/ISO-Schichtenmodell ausgebildet ist.

Gemäß einer weiteren Ausführungsform ist zumindest einer der internen Kommunikationslinks als ein unidirektionaler Kommunikationslink nach einem Ethernet-Standard, einem SDI-Standard, eine physikalische Leiterverbindung, insbesondere eine optische Faserleitung und/oder eine Leiterbahn, ausgebildet.

Dadurch, dass zumindest einer der internen Kommunikationslinks als ein unidirektionaler Kommunikationslink ausgebildet ist, wird in vorteilhafter Weise sichergestellt, dass die Datenübertragung zwischen, beispielsweise der ersten Kommunikationseinrichtung und der ersten Einwegkommunikationseinrichtung, nur von dem Sender zu dem Empfänger, also ausschließlich von der ersten Kommunikationseinrichtung zu der ersten Einwegkommunikationseinrichtung, übertragen wird und nicht umgekehrt. Dies erhöht die Manipulationssicherheit und die Sicherheit bei der Datenübertragung innerhalb der Übertragungsvorrichtung.

Vorzugsweise ist ein erster interner Kommunikationslink zwischen der ersten Kommunikationseinrichtung und der ersten Einwegkommunikationseinrichtung angeordnet. Weiterhin ist insbesondere ein zweiter interner Kommunikationslink zwischen der ersten Einwegkommunikationseinrichtung und der zweiten Kommunikationseinrichtung angeordnet. Beispielsweise ist ein dritter interner Kommunikationslink zwischen der zweiten Kommunikationseinrichtung und der zweiten Einwegkommunikationseinrichtung angeordnet. Vorzugsweise ist ein vierter interner Kommunikationslink zwischen der zweiten Einwegkommunikationseinrichtung und der ersten Kommunikationseinrichtung angeordnet. Beispielsweise können der erste und der zweite interne Kommunikationslink ausschließlich dazu verwendet werden, um Daten von dem ersten Netzwerk über die erste Einwegkommunika-tionseinrichtung zu dem zweiten Netzwerk zu übertragen. Insbesondere können der dritte und der vierte Kommunikationslink ausschließlich dazu verwendet werden, um Daten von dem zweiten Netzwerk über die zweite Einwegkommunikationseinrichtung zu dem ersten Netzwerk zu übertragen. Insbesondere bilden der erste und der zweite interne Kommunikationslink eine unidirektionale Verbindung von dem ersten Netzwerk zu dem zweiten Netzwerk, während der dritte und der vierte interne Kommunikationslink eine ausschließliche Verbindung von dem zweiten Netzwerk zu dem ersten Netzwerk bilden. Insbesondere sind der erste, zweite, dritte und vierte interne Kommunikationslink eingerichtet, eine Prüfnachricht oder Daten, welche jeweils über diesen übertragen wird oder werden, nur in einer unidirektionalen Richtung zu übertragen.

Der Ethernet-Standard umfasst insbesondere 10-Mbit/s-Ethernet, 100-Mbit/s-Ethernet, Gigabit-Ethernet, 2.5 und 5Gbit-Ethernet und/oder 10Gbit/s-Ethernet.

Der "Serial digital interface"(SDI)-Standard ist insbesondere eine serielle digitale Schnittstelle zur Übertragung von Daten über eine physikalische Leiterverbindung.

Unter einer Leiterbahn wird insbesondere eine physikalische Leiterverbindung verstanden, bei welchem das Medium zum Übertragen von Daten aus metallischen Materialen, wie vorzugsweise Kupfer, Aluminium, Gold oder Silber, ausgebildet ist. Unter einer optische Faserleitung wird beispielsweise eine physikalische Leiterverbindung verstanden, bei welcher das Medium zum Übertragen der Daten Licht ist. Hierbei werden insbesondere aus Lichtleitern ausgebildete Lichtwellenleiter und Lichtleitkabel verwendet.

Gemäß einer weiteren Ausführungsform ist zumindest eine der Kommunikations- oder Einwegkommunikationseinrichtungen als eingebettete Prozessorkarte, als System-on-Chip, insbesondere ARM-basiert, oder als ein Computer eingerichtet.

Advanced Risk Machine (ARM) ist insbesondere ein Mikroprozessordesign. Insbesondere können einzelne Funktionsblöcke, wie CPU-Kerne einer ARM-basierten CPU, zu einem System-on-Chip-Baustein konfiguriert werden.

Gemäß einer weiteren Ausführungsform ist jede Kommunikations- und Einwegkommunikationseinrichtung eingerichtet, über ihren internen Sendeport eine Prüfnachricht zu senden und an ihrem internen Empfangsport die über die anderen Kommunikations- und Einwegkommunikationseinrichtungen und internen Kommunikationslinks zu der ausgewählten Kommunikations- oder Einwegkommunikationseinrichtung aus den jeden Kommunikations- und Einwegkommunikationseinrichtungen zurück übertragenen, und insbesondere mit Prüfdaten ergänzten, Prüfnachricht zum Bestimmen eines Betriebszustands der Übertragungsvorrichtung auszuwerten.

Dadurch, dass jede Kommunikations- und Einwegkommunikationseinrichtung ihre eigene Prüfnachricht sendet, kann jede Kommunikations- und Einwegkommunikationseinrichtung selbstständig die Selbstüberprüfung durchführen. Insbesondere wenn eine Prüfnachricht, welche von einer der jeden Kommunikationseinrichtungen gesendet wurde und an dieser wieder erneut unverändert empfangen wird, ist kein Fehler in der Übertragungsvorrichtung auf dem Übertragungsweg zwischen den einzelnen Kommunikations- und den Einwegkommunikationseinrichtungen aufgetreten. Dies hat den Vorteil, dass zuverlässig ein Fehler auf dem Übertragungsweg oder eine Manipulation einer der internen Kommunikationslinks und/oder einer der Kommunikations- oder Einwegkommunikationseinrichtungen erkannt werden kann. Dies erhöht die Zuverlässigkeit bei der Datenübertagung mittels der Übertragungsvorrichtung.

Die Prüfdaten werden insbesondere dazu verwendet, einen Betriebszustand der Übertragungsvorrichtung zu bestimmen und diesen auszuwerten. Die Prüfdaten umfassen zumindest eine Information des Senders bzw. Erzeugers der Prüfnachricht und beispielsweise eine spezifische Sicherheitsinformation. Die spezifische Sicherheitsinformation kann als eine Nonce (also eine Zufallszahl) ausgebildet sein. Die spezifische Sicherheitsinformation kann ferner als ein Zeitstempel ausgebildet sein. Die Nonce wird vorzugsweise als Sitzungs-Identifikationsnummer verwendet. Die spezifische Sicherheitsinformation kann auch als spezifische Prüfdaten, welche innerhalb der Prüfnachricht ausgebildet sind, bezeichnet werden.

Die spezifische Sicherheitsinformation und die Information des Senders bzw. Erzeugers der Prüfnachricht werden für die Auswertung des Betriebszustandes der Übertragungsvorrichtung verwendet. Bei der Auswertung findet insbesondere ein **Ab**gleich der an dem internen Empfangsport der Kommunikations- oder Einwegkommunikationseinrichtung empfangenen Prüfnachricht mit der erwarteten Prüfnachricht statt, um als Resultat des Abgleichs ein Auswerteergebnis zu erhalten. Die erwartete Prüfnachricht ist vorzugsweise die Prüfnachricht, welche ursprünglich von der Kommunikations- oder Einwegkommunikationseinrichtung gesendet wurde. Stimmt die empfangene Prüfnachricht mit der erwarteten Prüfnachricht überein, ist dies beispielsweise ein Indiz dafür, dass die Übertragungsvorrichtung korrekt arbeitet.

Gemäß einer weiteren Ausführungsform umfasst die Übertragungsvorrichtung ferner eine Zwischenspeichereinrichtung zum Speichern eines Auswerteergebnisses.

Insbesondere wird die empfangene Prüfnachricht, welche an der ersten oder zweiten Kommunikationseinrichtung und/oder der ersten oder zweiten Einwegkommunikationseinrichtung empfangen wird, zum Bestimmen eines Betriebszustandes der Übertragungsvorrichtung ausgewertet, um ein Auswerteergebnis zu erhalten. Das Auswerteergebnis wird insbesondere mittels der Zwischenspeichereinrichtung der Übertragungsvorrichtung abgespeichert. Die Zwischenspeichereinrichtung ist insbesondere hardwaretechnisch und/oder softwaretechnisch implementiert.

Gemäß einer weiteren Ausführungsform ist die ausgewählte Kommunikations- oder Einwegkommunikationseinrichtung eingerichtet, eine jeweilige Prüfnachricht zu erzeugen, welche zumindest Identifizierungsinformation zum Identifizieren der ausgewählten Kommunikations- oder Einwegkommunikationseinrichtung und/oder zumindest für die gesendete Prüfnachricht spezifische Prüfdaten umfasst.

Die Identifizierungsinformation zum Identifizieren der ausgewählten Kommunikations- oder Einwegkommunikationseinrichtung umfasst insbesondere eine Information über den Erzeuger und/oder den Erzeuger der jeweiligen Prüfnachricht.

Gemäß einer weiteren Ausführungsform ist die ausgewählte Kommunikations- oder Einwegkommunikationseinrichtung eingerichtet, die Prüfnachricht und/oder die Prüfdaten mittels einer kryptographischen Prüfsumme zu versehen.

Gemäß einer weiteren Ausführungsform ist zumindest eine der anderen Kommunikations- oder Einwegkommunikationseinrichtungen eingerichtet, eine an ihrem internen Empfangsport empfangene mit einer kryptographischen Prüfsumme versehene Prüfnachricht und/oder mit einer kryptographischen Prüfsumme versehene Prüfdaten mittels eines öffentlichen Schlüssels oder eines symmetrischen Schlüssels der ausgewählten Kommunikations- oder Einwegkommunikationseinrichtung, zu validieren.

Durch die bereitgestellte Validierung der Prüfnachricht mittels kryptographischer Schlüssel ist es in vorteilhafter Weise möglich, zu verifizieren, dass die Prüfnachricht tatsächlich von der Kommunikations- oder Einwegkommunikationseinrichtung ist, welche behauptet, dass sie die Prüfnachricht gesendet hat, und andererseits in vorteilhafter Weise zu validieren, ob die Integrität der Nachricht gewährleistet ist. Insbesondere ist die Integrität der Prüfnachricht dann gewährleistet, wenn die Prüfnachricht während der Übertragung von zumindest einem internen Sendeport zu einem internen Empfangsport nicht unerwünscht modifiziert oder verändert wurde. Dies erhöht die Sicherheit bei der Datenübertragung zwischen dem ersten Netzwerk und dem zweiten Netzwerk.

Ein kryptographischer Schlüssel ist insbesondere ein öffentlicher, ein privater oder ein symmetrischer kryptographischer Schlüssel. Hierbei wird der private Schlüssel der ausgewählten Kommunikations- oder Einwegkommunikationseinrichtung verwendet, um mittels diesem die Prüfnachricht mit einer kryptographischen Prüfsumme zu versehen. Alternativ kann hierbei auch ein symmetrischer Schlüssel verwendet werden.

Unter einer digitalen Signatur wird vorliegend insbesondere ein digitales Signaturverfahren verstanden, bei welchem ein Sender, beispielsweise die erste ausgewählte Kommunikations- oder Einwegkommunikationseinrichtung, mittels ihres privaten Schlüssels die Prüfnachricht und/oder die Prüfdaten signiert. Das Signieren umfasst die Berechnung einer krypographischen Prüfsumme, welche insbesondere Teil der Prüfnachricht ist und/oder der Prüfnachricht angehängt wird. Mittels dieser Prüsumme kann vorzugsweise ein Empfänger, beispielsweise eine der anderen Kommunikations- oder Einwegkommunikationseinrichtungen, die Authentizität der ausgewählten Kommunikations- oder Einwegkommunikationseinrichtung und die Integrität der Prüfnachricht mittels des öffentlichen Schlüssels der ausgewählten Kommunikations- oder Einwegkommunikationseinrichtung überprüfen. Das digitale Signieren oder das digitale Signaturverfahren kann mittels Cryptographic Message Syntax (CMS) umgesetzt sein.

Ein öffentlicher Schlüssel ist vorzugsweise ein kryptografischer Schlüssel. Insbesondere ist der öffentliche Schlüssel nicht geheim. Mittels des öffentlichen Schlüssels können insbesondere zumindest digitale Signaturen geprüft werden. Hierbei kann ein öffentlicher Schlüssel eindeutig einer Kommunikations- oder Einwegkommunikationseinrichtung, wie beispielsweise der ausgewählten Kommunikations- oder Einwegkommunikationseinrichtung, zugeordnet werden. Der öffentliche Schlüssel wird insbesondere mittels eines Fingerprints (beispielsweise ein Hashwert) eindeutig gekennzeichnet.

Der private Schlüssel einer Kommunikations- oder Einwegkommunikationseinrichtung, wie beispielsweise der ausgewählten Kommunikations- oder Einwegkommunikationseinrichtung, wird vorzugsweise zum Signieren der Prüfnachricht und/oder der Prüfdaten verwendet bzw. dafür verwendet, um die Prüfnachricht und/oder die Prüfdaten mit einer krypographischen Prüfsumme zu versehen. Insbesondere verfügt nur die ausgewählte Kommunikations- oder Einwegkommunikationseinrichtung über den privaten Schlüssel zum digitalen Signieren der Prüfnachricht und/oder der Prüfdaten. Der private Schlüssel einer Kommunikations- oder Einwegkommunika-tionseinrichtung, wie der ausgewählten Kommunikations- oder Einwegkommunikationseinrichtung ist insbesondere geheim. Somit haben die anderen Kommunikations- oder Einwegkommunikations-einrichtungen keine Informationen über den geheimen privaten Schlüssel der ausgewählten Kommunikations- oder Einwegkom-munikationseinrichtung.

Insbesondere wird, alternativ zu privaten und öffentlichen kryptografischen Schlüsseln, ein symmetrischer Schlüssel zur Erzeugung eines Message Authentication Codes (MAC) verwendet, wie beispielsweise HMAC-SHA256. Dabei wird der symmetrische Schlüssel vorzugsweise zum Signieren und zum Validieren der Prüfnachricht und/oder der Prüfdaten verwendet.

Die Prüfnachricht, insbesondere die Prüfdaten der Nachricht, also die Identifizierungsinformation sowie die spezifischen Prüfdaten, werden vorzugsweise mit einer kryptographischen Prüfsumme versehen. Die krypographische Prüfsumme kann durch HMAC, durch einen symmetrischen Schlüssel oder durch die Verwendung eines öffentlichen-privaten Schlüsselpaars erzeugt werden.

Gemäß einer weiteren Ausführungsform ist jede der anderen Kommunikations- oder Einwegkommunikationseinrichtungen eingerichtet, einer empfangenen Prüfnachricht Prüfdaten hinzuzufügen, insbesondere eine der jeweiligen die Prüfnachricht empfangende Kommunikations- oder Einwegkommunikationseinrichtungen zugeordnete Prüfdaten hinzuzufügen.

Gemäß einer weiteren Ausführungsform ist ausschließlich die ausgewählte Kommunikations- oder Einwegkommunikationseinrichtung als Master-Einrichtung eingerichtet, eine Prüfnachricht zu erzeugen und zu versenden, wobei die anderen Kommunikations- oder Einwegkommunikationseinrichtungen als Slave-Einrichtungen den jeweiligen empfangenen Prüfnachrichten Prüfdaten hinzuzufügen und diese weiterleiten.

Dadurch, dass der von der Master-Einrichtung erzeugten Prüfnachricht Prüfdaten hinzugefügt werden und die Prüfnachricht lediglich über die anderen Kommunikations- oder Einwegkommunikationseinrichtungen weitergeleitet und zu der Master-Einrichtung zurückübertragen wird, verringert sich der Overhead der durch die Übertragungsvorrichtung übertragenen Daten. Somit wird die Übertragungsvorrichtung weniger belastet, da weniger Daten beim Bestimmten des Betriebszustandes der Übertragungsvorrichtung durch den obigen Ansatz anfallen. Dies führt zu einem stabileren und zuverlässigeren Betrieb bei der Datenübertragung unter Verwendung der Übertragungsvorrichtung.

Die zugeordnete Sicherheitsinformation umfasst insbesondere eine Nonce (also eine Zufallszahl) oder einen Zeitstempel. Die zugeordnete Sicherheitsinformation kann auch als spezifische Prüfdaten, welche innerhalb der Prüfnachricht ausgebildet sind, bezeichnet werden.

Insbesondere ist bei diesem Ansatz eine ausgewählte Kommunikations- oder Einwegkommunikationseinrichtung als eine Master-Einrichtung ausgebildet, welche eine Prüfnachricht erzeugt und versendet. Die anderen Kommunikations- oder Einwegkommunikationseinrichtungen der Übertragungsvorrichtung sind in diesem Fall jeweils als eine Slave-Einrichtung ausgebildet. Jede Slave-Einrichtung hängt ihre eigene zugeordneten Prüfdaten der von der Master-Einrichtung initiierten Prüfnachricht an. Wenn die Master-Einrichtung nicht die eigene Prüfnachricht empfängt, welche die Informationen umfasst, die bei der Erzeugung der Prüfnachricht angehängt wurden sowie jeweils von den Slave-Einrichtungen ergänzt wurden, ist dies ein Indiz dafür, dass eine der anderen Kommunikations- oder Einwegkommunikationseinrichtungen oder eine der physischen internen Kommunikationslinks manipuliert wurde und/oder fehlerhaft ist und nicht mehr korrekt funktioniert.

Gemäß einer weiteren Ausführungsform ist jede der anderen Kommunikations- oder Einwegkommunikationseinrichtungen eingerichtet, eine empfangene Prüfnachricht ausschließlich weiterzuleiten.

Hierbei wird insbesondere eine einzige Prüfnachricht jeweils empfangen und über jede der anderen Kommunikations- oder Einwegkommunikationseinrichtungen weitergeleitet, bis diese wieder an dem internen Empfangsport des Senders und/oder des Erzeugers der Prüfnachricht, wie der ausgewählten Kommunikations- oder Einwegkommunikationseinrichtungen, empfangen wird.

Wenn beispielsweise der Erzeuger der Prüfnachricht die ausgewählte Kommunikations- oder Einwegkommunikationseinrichtung, welche als die erste Kommunikationseinrichtung ausgebildet ist, wird diese zuerst über die erste Einwegkommunikationseinrichtung unidirektional zu der zweiten Kommunikationseinrichtung weitergeleitet. Von dort aus wird die Prüfnachricht über die zweite Einwegkommunikationseinrichtung weitergeleitet und zu der ersten Kommunikationseinrichtung zurück übertragen. Vorzugsweise empfängt die erste Kommunikationseinrichtung nach genau drei Weiterleitungen, nämlich über die erste Einwegkommunikationseinrichtung, die zweite Kommunikationseinrichtung und die zweite Einwegkommunikationseinrichtung, wieder die erzeugte und gesendete Prüfnachricht.

Erfindungsgemäß sind gemäß dem ersten Aspekt die Kommunikations- und Einwegkommunikationseinrichtungen derart mit Hilfe der internen Kommunikationslinks miteinander gekoppelt, dass eine jeweilige Prüfnachricht von allen anderen Kommunikations- oder Einwegkommunikationseinrichtungen empfangen wird.

Dies führt in vorteilhafter Weise dazu, dass es möglich ist, dass jede einzelne Kommunikations- oder Einwegkommunikations-einrichtung eine jeweilige Prüfnachricht senden, weiterleiten und/oder empfangen kann. Dies erhöht die Zuverlässigkeit bei der Datenübertragung innerhalb der Übertragungsvorrichtung.

Gemäß einer weiteren Ausführungsform ist die ausgewählte Kommunikations- oder Einwegkommunikationseinrichtung eingerichtet, die Prüfnachricht zu vorgegebenen Zeitpunkten zu erzeugen und über ihren internen Sendeport zu versenden, insbesondere bei einem Hochfahren der Übertragungsvorrichtung.

Dies hat den Vorteil, dass durch den Administrator oder Benutzer festgelegt werden kann, zu welchen Zeitpunkten die Selbstüberprüfung der Übertragungsvorrichtung durchgeführt werden soll. Das erhöht die Sicherheit bei der Datenübertragung innerhalb der Übertragungsvorrichtung sowie die Wahrscheinlichkeit der Detektion von Manipulationen oder Fehlern.

Weiterhin sind andere vorgegebene Zeitpunkte möglich, wie beispielsweise regelmäßig in vorbestimmten Zeitintervallen, wie z. B. jede Stunde oder jeden Tag, und/oder unregelmäßig bei einer Benutzereingabe des Administrators.

Gemäß einer weiteren Ausführungsform sind die erste Einwegkommunikationseinrichtung und die zweite Einwegkommunikationseinrichtung als eine einzige Kommunikationseinrichtung integriert.

Es ist insbesondere möglich die Einwegkommunikationseinrichtungen in einem Core-Board zu implementieren. Dies führt dazu, dass anstatt zwei verschiedene Einwegkommunikationseinrichtungen, wie die erste und die zweite Einwegkommunikationseinrichtung, lediglich eine einzige Einwegkommunikationseinrichtung verwendet wird. Dies führt zu dem Vorteil, dass sich die Ausfallsicherheit und somit die Zuverlässigkeit der Übertragungsvorrichtung erhöht.

Die vorgenannten Einwegkommunikationseinrichtungen können zur Ausbildung der Übertragungsvorrichtung als eine körperliche Einheit mit festen internen Verbindungen ausgebildet werden.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1: zeigt ein schematisches Blockdiagram eines Ausführungsbeispiels einer Übertragungsvorrichtung;
- Fig. 2: zeigt ein schematisches Ablaufdiagram eines Ausführungsbeispiels zum Bestimmen eines Betriebszustandes der Übertragungsvorrichtung nach Fig. 1;
- Fig. 3: zeigt ein schematisches Ablaufdiagram eines weiteren Ausführungsbeispiels zum Bestimmen eines Betriebszustandes der Übertragungsvorrichtung nach Fig. 1; und
- Fig. 4: zeigt schematische Blockdiagramme mehrerer mit kryptographischer Prüfsumme versehene Prüfnachrichten jeweils umfassend unterschiedliche Prüfdaten.

In den Figuren sind gleiche oder funktionsgleiche Elemente mit denselben Bezugszeichen versehen worden, sofern nichts anderes angegeben ist.

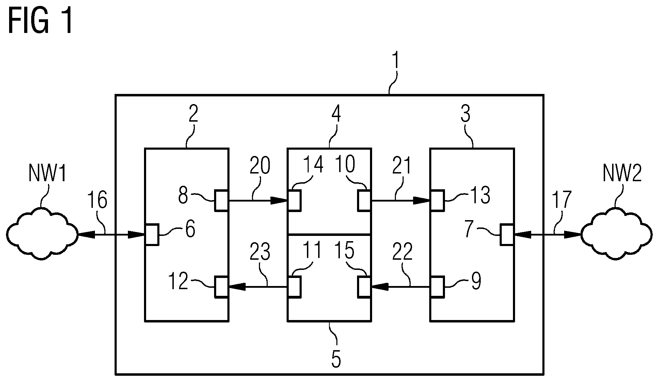

Die Fig. 1 zeigt ein schematisches Blockdiagram eines Ausführungsbeispiels einer Übertragungsvorrichtung 1 zum Übertragen von Daten zwischen einem ersten Netzwerk NW1 und einem zweiten Netzwerk NW2. Die Übertragungsvorrichtung 1 der Fig. 1 umfasst eine erste Kommunikationseinrichtung 2, eine zweite Kommunikationseinrichtung 3, eine erste Einwegkommunikationseinrichtung 4 sowie eine zweite Einwegkommunikationseinrichtung 5.

In der Fig. 1 ist in einer Ausführungsform eine der Kommunikations- oder Einwegkommunikationseinrichtungen 2, 3, 4, 5 als System-on-Chip, insbesondere ARM-basiert, eingerichtet. In einer weiteren Ausführungsform ist eine der Kommunikations- oder Einwegkommunikationseinrichtungen 2, 3, 4, 5 als eine eingebettete Prozessorkarte ausgebildet.

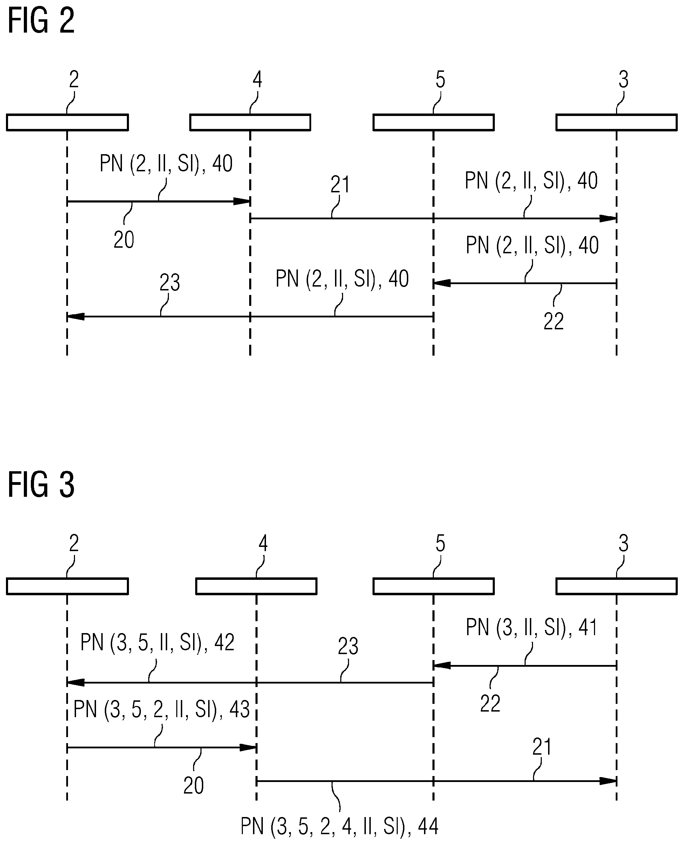

Die erste Kommunikationseinrichtung 2 weist eine erste Schnittstelleneinrichtung 6 zum Koppeln an das erste Netzwerk NW1, einen internen Empfangsport 12 zum Empfangen von Nachrichten und einen internen Sendeport 8 zum Senden von Nachrichten auf. In der Fig. 1 wird mittels der ersten Kommunikationsverbindung 16 die erste Kommunikationseinrichtung 2 mit dem ersten Netzwerk NW1 zum Datenaustausch gekoppelt. Das Senden und Empfangen von Nachrichten in Fig. 1 umfasst insbesondere das Senden und Empfangen der mit Prüfdaten II, SI ergänzten Prüfnachricht PN (siehe Fig. 2 und 3).

Ferner weist die zweite Kommunikationseinrichtung 3 eine zweite Schnittstelleneinrichtung 7 zum Koppeln an das zweite Netzwerk NW2, einen internen Empfangsport 13 zum Empfangen von Nachrichten und einen internen Sendeport 9 zum Senden von Nachrichten auf. In der Fig. 1 wird mittels der zweiten Kommunikationsverbindung 17 die zweite Kommunikationseinrichtung 3 mit dem zweiten Netzwerk NW2 zum Datenaustausch gekoppelt. In Fig. 1 ist zwischen dem internen Sendeport 8 der ersten Kommunikationseinrichtung 2 und einem internen Empfangsport 14 der ersten Einwegkommunikationseinrichtung 4 ein erster Kommunikationslink 20 angeordnet, um Nachrichten, insbesondere zumindest die Prüfnachricht PN, unidirektional von der ersten Kommunikationseinrichtung 2 zu der ersten Einwegkommunikationseinrichtung 4 zu übertragen.

Weiterhin ist in der Fig. 1 die erste Einwegkommunikationseinrichtung 4 dargestellt, welche den internen Empfangsport 14 zum Empfangen von Nachrichten von der ersten Kommunikationseinrichtung 2 und einen internen Sendeport 10 zum Senden von Nachrichten an die zweite Kommunikationseinrichtung 3 umfasst. Ferner ist in Fig. 1 zwischen dem internen Sendeport 10 der ersten Einwegkommunikationseinrichtung 4 und dem internen Empfangsport 13 der zweiten Kommunikationseinrichtung 3 ein zweiter Kommunikationslink 21 angeordnet, um Nachrichten, insbesondere zumindest die Prüfnachricht PN, unidirektional von der ersten Einwegkommunikationseinrichtung 4 zu der zweiten Kommunikationseinrichtung 3 zu übertragen.

Ebenfalls in Fig. 1 gezeigt, ist die zweite Einwegkommunika-tionseinrichtung 5, die einen internen Empfangsport 15 zum Empfangen von Nachrichten von der zweiten Kommunikationseinrichtung 3 und einen internen Sendeport 11 zum Senden von Nachrichten an die erste Kommunikationseinrichtung 2 aufweist. In einer nicht dargestellten Ausführungsform sind die erste Einwegkommunikationseinrichtung 4 und die zweite Einwegkommunikationseinrichtung 5 als eine einzige Einwegkommunikationseinrichtung integriert.

Weiterhin ist in Fig. 1 zwischen dem internen Sendeport 9 der zweiten Kommunikationseinrichtung 3 und dem internen Empfangsport 15 der zweiten Einwegkommunikationseinrichtung 5 ein dritter Kommunikationslink 22 angeordnet, um Nachrichten, insbesondere zumindest die Prüfnachricht PN, unidirektional von der zweiten Kommunikationseinrichtung 3 zu der zweiten Einwegkommunikationseinrichtung 5 zu übertragen, während zwischen dem internen Sendeport 11 der zweiten Einwegkommunika-tionseinrichtung 5 und dem internen Empfangsport 12 der ersten Kommunikationseinrichtung 2 ein vierter Kommunikationslink 23 angeordnet ist, um Nachrichten, insbesondere zumindest die Prüfnachricht PN, unidirektional von der zweiten Einwegkommunikationseinrichtung 5 zu der ersten Kommunikationseinrichtung 2 zu übertragen. Jeder der Kommunikationslinks 20, 21, 22, 23 ist als ein interner physischer Kommunikationslink 20, 21, 22, 23 angeordnet, welcher in einer Übertragungsschicht, Schicht 1, gemäß dem OSI/ISO-Schichtenmodell, ausgebildet ist.

Zusätzlich ist zumindest einer der internen Kommunikationslinks 20, 21, 22, 23 in dieser Ausführungsform als eine unidirektionale physikalische Leiterverbindung, insbesondere als eine Leiterbahn ausgebildet. In einer weiteren Ausführungsform ist zumindest einer der internen Kommunikationslinks 20, 21, 22, 23 als ein unidirektionaler Kommunikationslink nach einem Ethernet-Standard, einem SDI-Standard oder nach einer physikalische Leiterverbindung, insbesondere einer optische Faserleitung, ausgebildet.

Eine ausgewählte Kommunikations- oder Einwegkommunikationseinrichtung 2, 3, 4, 5 der Fig. 1, wie zum Beispiel in dieser Ausführungsform die erste Kommunikationseinrichtung 2, ist dazu eingerichtet, über ihren internen Sendeport 8 eine Prüfnachricht PN zu senden und an ihrem internen Empfangsport 12 die über die anderen Kommunikationseinrichtungen 3 und Einwegkommunikationseinrichtungen 4, 5 intern zu der ausgewählten Kommunikationseinrichtung 2 zurück übertragenen und mit Prüfdaten II, SI ergänzten Prüfnachricht PN zum Bestimmen eines Betriebszustands der Übertragungsvorrichtung 1 auszuwerten. Diese Prüfnachricht PN umfasst in den Fig. 1 bis Fig. 4 zumindest eine Identifizierungsinformation II zum Identifizieren der ausgewählten Kommunikations- oder Einwegkommunika-tionseinrichtung 2, 3, 4, 5 und zumindest eine für die gesendete Prüfnachricht PN spezifische Sicherheitsinformation SI. Die spezifische Sicherheitsinformation SI kann auch als spezifische Prüfdaten bezeichnet werden.

Fig. 2 zeigt ein schematisches Ablaufdiagram eines Ausführungsbeispiels zum Bestimmen eines Betriebszustandes der Übertragungsvorrichtung 1 nach Fig. 1. Beispielsweise beginnt die Bestimmung des Betriebszustandes der Übertragungsvorrichtung 1 in Fig. 2 bei einem Hochfahren der Übertragungsvorrichtung 1.

Dabei ist die erste Kommunikationseinrichtung 2 als die ausgewählte Kommunikationseinrichtung ausgebildet. Die erste Kommunikationseinrichtung 2 sendet in einem ersten Schritt über den ersten Kommunikationslink 20 die mit Prüfdaten SI, II ergänzte und erzeugte Prüfnachricht PN zu der ersten Einwegkommunikationseinrichtung 4. Diese gesendete Prüfnachricht PN umfasst die Identifizierungsinformation II des Senders, also der ersten Kommunikationseinrichtung 2 sowie die spezifische Sicherheitsinformation SI. Dies ist dargestellt in Fig. 2 mit den Bezugszeichen PN (2, II, SI).

In einem nächsten Schritt wird die mit Prüfdaten ergänzte Prüfnachricht PN (2, II, SI) von der ersten Einwegkommunika-tionseinrichtung 4 zu der zweiten Kommunikationseinrichtung 3 über den zweiten Kommunikationslink 21 übertragen. Danach wird in einem weiteren Schritt die mit Prüfdaten ergänzte Prüfnachricht PN (2, II, SI) über den dritten Kommunikationslink 22 zu der zweiten Einwegkommunikationseinrichtung 5 übertragen. Anschließend wird in einem letzten Schritt die mit Prüfdaten ergänzte Prüfnachricht PN (2, II, SI) von der zweiten Einwegkommunikationseinrichtung 5 über den vierten Kommunikationslink 23 zu der ersten Kommunikationseinrichtung 2 zurück übertragen. Somit sendet und empfängt innerhalb eines Zyklus zum Bestimmen des Betriebszustandes der Übertragungsvorrichtung 1 jede Kommunikations- und Einwegkommunika-tionseinrichtung 2, 3, 4, 5 die mit Prüfdaten ergänzte Prüfnachricht PN (2, II, SI). Damit wird innerhalb der Übertragungsvorrichtung 1 die mit Prüfdaten ergänzte Prüfnachricht PN (2, II, SI) insbesondere genau viermal übertragen, bis diese wieder an ihrer ursprünglichen (ausgewählten) Kommunikationseinrichtung 2 empfangen wird. Dabei ist jede der anderen Kommunikations- oder Einwegkommunikationseinrichtungen 3, 4, 5 eingerichtet, die empfangene Prüfnachricht PN (2, II, SI) ausschließlich weiterzuleiten.

Nachdem die mit Prüfdaten ergänzte Prüfnachricht PN (2, II, SI), welche ursprünglich von der ersten Kommunikationseinrichtung 2 erzeugt wurde, wieder an dieser empfangen wurde, findet ein Abgleich statt, um den Betriebszustand der Übertragungsvorrichtung 1 zu bestimmen.

Der Abgleich umfasst einen Abgleich zwischen der an der ersten Kommunikationseinrichtung 2 empfangenen Prüfnachricht PN und mit der erwarteten Prüfnachricht PN, um als Resultat des Abgleichs ein Auswerteergebnis zu erhalten. Die erwartete Prüfnachricht ist vorzugsweise die Prüfnachricht PN, welche ursprünglich von der ersten Kommunikationseinrichtung 2 gesendet wurde. Stimmt die empfangene Prüfnachricht PN (2, II, SI) mit der erwarteten Prüfnachricht PN (2, II, SI) überein, also stimmen insbesondere die Prüfdaten der Prüfnachricht, also die Identifizierungsinformation II und die spezifische Sicherheitsinformation SI überein, ist dies beispielsweise ein Indiz dafür, dass die Übertragungsvorrichtung 1 korrekt arbeitet. Das daraus erhaltene Auswerteergebnis wird anschließend mit einer Zwischenspeichereinrichtung abgespeichert.

In Fig. 2 ist somit der Fall dargestellt, in welchem die Übertragungsvorrichtung 1 korrekt arbeitet und die mit Prüfdaten ergänzte Prüfnachricht PN (2, II, SI) wieder an der ersten Kommunikationseinrichtung 2 unverändert empfangen und ausgewertet wird. Somit liegt weder ein Fehler in einer der Kommunikations- oder Einwegkommunikationseinrichtungen 2, 3, 4, 5 vor, noch ist einer der internen Kommunikationslinks 20, 21, 22, 23 defekt.

In einem nicht dargestellten Beispiel arbeitet die Übertragungsvorrichtung 1 nicht korrekt. Dabei wird durch die Auswertung des Betriebszustandes bei einem Hochfahren festgestellt, dass beispielsweise der zweite Kommunikationslink 21 unterbrochen ist. Somit kann die mit Prüfdaten ergänzte Prüfnachricht PN (2, II, SI) nicht an der ersten Kommunikationseinrichtung 2 ankommen. Die Auswertung des Betriebszustandes ergibt somit, dass die mit Prüfdaten ergänzte Prüfnachricht PN (2, II, SI) nicht an der zweiten Kommunikationseinrichtung 3 ankommt. Damit ist das ein Anzeichen, dass in dem zweiten Kommunikationslink 21 ein Defekt vorhanden ist und der Kommunikationslink 21 unterbrochen ist oder dass zumindest das Senden durch die erste Einwegkommunikationseinrichtung 4 nicht funktioniert hat und ein Fehler in der ersten Einwegkommunikationseinrichtung 4 vorliegt. Dieses Vorgehen kann auf jede der Kommunikations- und Einwegkommunikationseinrichtungen 3, 4, 5 sowie Kommunikationslinks 20, 22, 23 adaptiert werden, um die genaue Ursache des auftretenden Fehlers zu detektieren und zu lokalisieren.

In einer weiteren Ausführungsform der Fig. 2 ist beispielweise die erste Einwegkommunikationseinrichtung 4 dazu eingerichtet, eine mit Prüfdaten ergänzte Prüfnachricht PN (2, II, SI) zu erzeugen und zu senden. Wenn diese mit Prüfdaten ergänzte Prüfnachricht PN (2, II, SI) wieder unverändert über die vier Kommunikationslinks 21, 22, 23, 20 durch die erste Einwegkommunikationseinrichtung 4 empfangen wird, ist das ein Anzeichen dafür, dass die Übertragungsvorrichtung 1 korrekt arbeitet.

Fig. 3 zeigt ein schematisches Ablaufdiagram eines weiteren Ausführungsbeispiels zum Bestimmen eines Betriebszustandes der Übertragungsvorrichtung 1 nach Fig. 1. Beispielsweise beginnt die Bestimmung des Betriebszustandes der Übertragungsvorrichtung 1 in Fig. 3, wie in Fig. 2 auch, bei einem Hochfahren der Übertragungsvorrichtung 1.

Hierbei erzeugt und versendet ausschließlich die ausgewählte Kommunikations- oder Einwegkommunikationseinrichtung 2, 3, 4, 5 als eine Master-Einrichtung eine mit Prüfdaten ergänzte Prüfnachricht PN (3, II, SI) Prüfnachricht. In Fig. 3 ist die zweite Kommunikationseinrichtung 3 die Master-Einrichtung.

Jede der anderen Kommunikations- oder Einwegkommunikations-einrichtungen 2, 4, 5 sind in der Fig. 3 dazu eingerichtet, einer jeweils empfangenen Prüfnachricht PN Prüfdaten II, SI, insbesondere eine der jeweiligen die Prüfnachricht PN empfangende Kommunikations- oder Einwegkommunikationseinrichtungen 2, 4, 5 zugeordnete Sicherheitsinformation SI hinzuzufügen. Die zugeordnete Sicherheitsinformation SI kann auch als zugeordnete Prüfdaten bezeichnet werden. In der Fig. 3 agieren die anderen Kommunikations- oder Einwegkommunikationseinrichtungen 2, 4, 5 als Slave-Einrichtungen, welche der jeweiligen empfangenen Prüfnachrichten PN Prüfdaten II, SI hinzuzufügen und diese weiterleiten.

Dies wird nachfolgend im Detail anhand der Fig. 3 beschrieben.

In einem ersten Schritt erzeugt und versendet ausschließlich die zweite Kommunikationseinrichtung 3 als die Master-Einrichtung die mit Prüfdaten ergänzte Prüfnachricht PN (3, II, SI) über den dritten Kommunikationslink 22 unidirektional zu der zweiten Einwegkommunikationseinrichtung 5. Dabei ist das Bezugszeichen 3 die Identifizierungsinformation zur Identifizierung, dass die zweite Kommunikationseinrichtung 3 die Nachricht gesendet bzw. erzeugt hat, und das Bezugszeichen SI gibt die zugeordnete Sicherheitsinformation SI der zweiten Kommunikationseinrichtung 3 an.

Die zweiten Einwegkommunikationseinrichtung 5 fügt an die empfangene mit Prüfdaten ergänzte Prüfnachricht PN (3, II, SI) ihre eigene Identifizierungsinformation 5, II, an und leitet diese mit Prüfdaten ergänzte Prüfnachricht PN (3, 5, II, SI) über den vierten Kommunikationslink 23 an die erste Kommunikationseinrichtung 2 weiter.

Anschließend fügt die erste Kommunikationseinrichtung 2 an die empfangene mit Prüfdaten ergänzte Prüfnachricht PN (3, 5, II, SI) ihre eigene Identifizierungsinformation 2, II, an und leitet diese mit Prüfdaten ergänzte Prüfnachricht PN (3, 5, 2, II, SI) über den ersten Kommunikationslink 20 an die erste Einwegkommunikationseinrichtung 4 weiter.

In einem letzten Schritt fügt die erste Einwegkommunikationseinrichtung 4 an die empfangene mit Prüfdaten ergänzte Prüfnachricht PN (3, 5, 2, II, SI) ihre eigene Identifizierungsinformation 4, II, an und leitet diese mit Prüfdaten ergänzte Prüfnachricht PN (3, 5, 2, 4, II, SI) über den zweiten Kommunikationslink 20 an die zweite Kommunikationseinrichtung 3 weiter.

Daraufhin überprüft die zweite Kommunikationseinrichtung 3, ob die empfangene mit Prüfdaten ergänzte Prüfnachricht PN (3, 5, 2, 4, II, SI) alle Identifizierungsinformationen der anderen Kommunikations- und Einwegkommunikationseinrichtungen 2, 4, 5 aufweist. Falls dies der Fall ist, ist das ein Anzeichen dafür, dass die Übertragungsvorrichtung 1 korrekt arbeitet. Dies ist auch in Fig. 3 dargestellt. Dabei ist kein Kommunikationslink 20, 21, 22, 23 unterbrochen oder defekt und jede andere Kommunikations- und Einwegkommunikationseinrichtung 2, 4, 5 arbeitet korrekt, da die zweite Kommunikationseinrichtung 3 eine Prüfnachricht PN empfängt, welche alle Prüfdaten (3, 5, 2, 4, II, SI) der anderen Kommunikations- und Einwegkommunikationseinrichtungen 2, 4, 5 aufweist.

Die oben beschriebenen Schritte gelten auch für den Fall, wenn eine andere Kommunikations- oder Einwegkommunikationseinrichtung 2, 4, 5 die Master-Einrichtung ist. Dabei ändert sich nur der Startpunkt der Erzeugung und des Versendens der mit Prüfdaten erzeugten Prüfnachricht PN (II, SI).

In einem nicht dargestellten Beispiel arbeitet die Übertragungsvorrichtung 1 nicht korrekt. Dabei wird durch die Auswertung des Betriebszustandes bei einem Hochfahren festgestellt, dass beispielsweise der erste Kommunikationslink 20 unterbrochen ist. Somit kann die mit Prüfdaten ergänzte Prüfnachricht PN (3, 5, II, SI) nicht an der ersten Einwegkommunikationseinrichtung 4 ankommen. Die Auswertung des Betriebszustandes ergibt somit, dass die mit Prüfdaten ergänzte Prüfnachricht PN (3, 5, II, SI) nicht an der ersten Einwegkommunikationseinrichtung 4 ankommt. Damit ist das ein Anzeichen, dass in dem ersten Kommunikationslink 20 ein Defekt vorhanden ist und der erste Kommunikationslink 20 unterbrochen ist oder dass zumindest das Weiterleiten durch die erste Kommunikationseinrichtung 2 nicht funktioniert und ein Fehler in der ersten Kommunikationseinrichtung 2 vorliegt. Dieses Vorgehen kann auf jede der Kommunikations- und Einwegkommunikations-einrichtungen 2, 4, 5 sowie Kommunikationslinks 21, 22, 23 adaptiert werden, um die genaue Ursache des auftretenden Fehlers zu detektieren und zu lokalisieren.

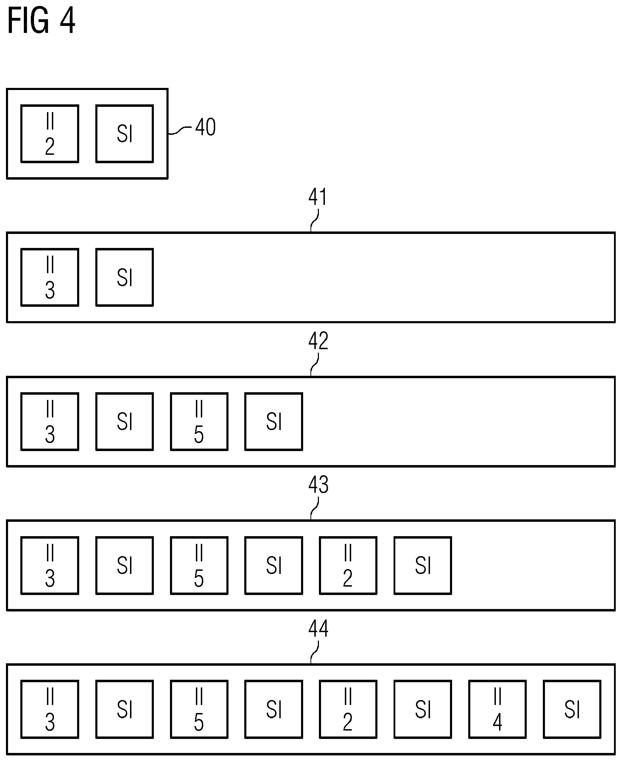

Fig. 4 zeigt schematische Blockdiagramme mehrerer Prüfnachrichten 40, 41, 42, 43, 44, welche jeweils mit einer kryptographischen Prüfsumme versehen sind, jeweils umfassend unterschiedliche Prüfdaten II, SI. Die kryptographische Prüfsumme wird über ein Signaturverfahren erzeugt. Insofern wird im Weiteren auch von signierten Prüfnachrichten oder -Daten gesprochen.

Die Kommunikations- und Einwegkommunikationseinrichtungen 2, 3, 4, 5 der Übertragungsvorrichtung 1 sind auch eingerichtet, die Prüfdaten II, SI bzw. die Prüfnachricht PN umfassend die Prüfdaten II, SI zu signieren, um diese gesichert zu der jeweils anderen Kommunikations- oder Einwegkommunikationseinrichtung 2, 3, 4, 5 zu übertragen. Dies ist anhand der Fig. 4 genauer dargestellt.

In Fig. 4 ist mit dem Bezugszeichen 40 eine mittels eines kryptographischen Schlüssels mittels einer digitalen Signatur signierte Prüfnachricht 40 (2, II, SI) gezeigt, welche entsprechend der Fig. 2 von der ersten Kommunikationseinrichtung 2 erzeugt und signiert wurde. Die Signierung erfolgt insbesondere mit einem privaten kryptographischen Schlüssel der ersten Kommunikationseinrichtung **2.** Diese signierte Prüfnachricht 40 wird gemäß Fig. 2 an die erste Einwegkommunikationseinrichtung 4 über den ersten Kommunikationslink 20 übertragen. Die erste Einwegkommunikationseinrichtung 4 kann dann die signierte Prüfnachricht 40 (2, II, SI) mittels eines öffentlichen Schlüssels der ersten Kommunikationseinrichtung 2 validieren. Somit wird in vorteilhafter Weise sichergestellt, dass die übertragene signierte Prüfnachricht 40 (2, II, SI) nicht manipuliert worden ist und ebenfalls auch, dass sie von der ersten Kommunikationseinrichtung 2 erzeugt und gesendet wurde.

In einem nicht dargestellten nächsten Schritt kann die erste Einwegkommunikationseinrichtung 4 die von der ersten Kommunikationseinrichtung 2 empfangene Prüfnachricht (2, II, SI) zum weiteren Übertragen zu der zweiten Kommunikationseinrichtung 3 mittels des eigenen privaten Schlüssels mittels einer digitalen Signatur signiert. Nun kann die erste Einwegkommunika-tionseinrichtung 4 die signierte Prüfnachricht PN (4, II, SI), nicht dargestellt, zu der zweiten Kommunikationseinrichtung 5 übertragen und die zweite Kommunikationseinrichtung 5 ist dann dazu eingerichtet, die Integrität der signierten Prüfnachricht PN (4, II, SI) und den Sender dieser mittels des öffentlichen Schlüssels der erste Einwegkommunikationseinrichtung 4 zu überprüfen und im Zuge dessen die signierte Prüfnachricht PN (4, II, SI) zu validieren. Auch die zweite Kommunikationseinrichtung 3 und die zweite Einwegkommunikationseinrichtung 5 sind dazu eingerichtet, die Prüfnachricht jeweils zu signieren und eine empfangene signierte Prüfnachricht 40 zu validieren, um damit in vorteilhafter Weise die Sicherheit bei der Übertragung von Prüfnachrichten PN in der Übertragungsvorrichtung 1 zu erhöhen.

Unter Verwendung des Ausführungsbeispiels der Fig. 3, ist in Fig. 4 dargestellt, wie die ausgewählte Kommunikationseinrichtung 3 (Master-Einrichtung) eingerichtet ist, die Prüfnachricht PN und die Prüfdaten (3, II, SI) mittels eines kryptographischen Schlüssels mittels einer digitalen Signatur zu signieren und weiter zu verarbeiten.

In Fig. 4 ist mit dem Bezugszeichen 41 eine mittels eines kryptographischen Schlüssels mittels einer digitalen Signatur signierte Prüfnachricht 41 (3, II, SI) gezeigt, welche entsprechend der Fig. 3 von der zweiten Kommunikationseinrichtung 3 erzeugt und signiert wurde. Die Signierung erfolgt insbesondere mit einem privaten kryptographischen Schlüssel der zweiten Kommunikationseinrichtung 3. Diese signierte Prüfnachricht 41 wird gemäß Fig. 3 an die zweite Einwegkommunikationseinrichtung 5 über den dritten Kommunikationslink 22 übertragen. Die zweite Einwegkommunikationseinrichtung 5 kann dann die signierte Prüfnachricht 41 (3, II, SI) mittels eines öffentlichen Schlüssels der zweiten Kommunikationseinrichtung 3 validieren. Somit wird in vorteilhafter Weise sichergestellt, dass die übertragene Prüfnachricht 41 (3, II, SI) nicht manipuliert worden ist und ebenfalls auch von der zweiten Kommunikationseinrichtung 3 erzeugt und gesendet wurde.

Anschließend fügt die zweite Kommunikationseinrichtung 5 Prüfdaten, welche spezifisch für die zweite Kommunikationseinrichtung 5 sind, der Prüfnachricht 41 hinzu, und signiert diese spezifischen Prüfdaten (5, II, SI) mit dem privaten Schlüssel mittels einer digitalen Signatur der zweiten Kommunikationseinrichtung 5. Somit entsteht die Prüfnachricht 42 (3, 5, II, SI), welche anschließend an die erste Kommunikationseinrichtung 2 weitergeleitet wird.

Nun fügt die erste Kommunikationseinrichtung 2 Prüfdaten, welche spezifisch für die erste Kommunikationseinrichtung 2 sind, der Prüfnachricht 42 hinzu, und signiert diese spezifischen Prüfdaten (2, II, SI) mit dem privaten Schlüssel mittels einer digitalen Signatur der ersten Kommunikationseinrichtung 2. Somit entsteht die Prüfnachricht 43 (3, 5, 2, II, SI), welche anschließend an die erste Einwegkommunikationseinrichtung 4 weitergeleitet wird.

Anschließend fügt die erste Einwegkommunikationseinrichtung 4 Prüfdaten, welche spezifisch für die erste Einwegkommunikationseinrichtung 4 sind, der Prüfnachricht 43 hinzu, und signiert diese spezifischen Prüfdaten (4, II, SI) mit dem privaten Schlüssel mittels einer digitalen Signatur der ersten Einwegkommunikationseinrichtung 4. Somit entsteht die Prüfnachricht 44 (3, 5, 2, 4, II, SI), welche anschließend zurück an die zweite Kommunikationseinrichtung 3 weitergeleitet wird.

Dann kann die Master-Einrichtung 3 die signierte Prüfnachricht 44 validieren und anschließend den Betriebszustand der Übertragungsvorrichtung 1 bestimmen.

Die in den Übertragungsvorrichtungen implementierten vorgeschlagenen Diagnoseverfahren mit Hilfe von Prüfnachrichten innerhalb der bidirektionalen Network Guards ermöglichen einen zuverlässigen Betrieb eines Datenverkehrs zwischen verschiedenen Netzwerken. Die Bestimmung des jeweiligen Betriebszustands erlaubt einen Eingriff bei Fehlern oder Manipulationen in oder an dem beispielsweise als SoC ausgeführten Übertragungsvorrichtungen. Insofern kann eine verbesserte Netzwerk- und Datensicherheit erzielt werden.

## Patentansprüche

1. Übertragungsvorrichtung (1) zum Übertragen von Daten zwischen einem ersten Netzwerk (NW1) und einem zweiten Netzwerk (NW2), wobei die Übertragungsvorrichtung (1) umfasst:
eine erste Kommunikationseinrichtung (2) mit einer ersten Schnittstelleneinrichtung (6) zum Koppeln an das erste Netzwerk (NW1), einem internen Empfangsport (12) zum Empfangen von Nachrichten und einem internen Sendeport (8) zum Senden von Nachrichten,
eine zweite Kommunikationseinrichtung (3) mit einer zweiten Schnittstelleneinrichtung (7) zum Koppeln an das zweite Netzwerk (NW2) einem internen Empfangsport (13) zum Empfangen von Nachrichten und einem internen Sendeport (9) zum Senden von Nachrichten,
eine erste Einwegkommunikationseinrichtung (4) mit einem internen Empfangsport (14) zum Empfangen von Nachrichten von der ersten Kommunikationseinrichtung (2) und einem internen Sendeport (10) zum Senden von Nachrichten an die zweite Kommunikationseinrichtung (3); und
eine zweite Einwegkommunikationseinrichtung (5) mit einem internen Empfangsport (15) zum Empfangen von Nachrichten von der zweiten Kommunikationseinrichtung (3) und einem internen Sendeport (11) zum Senden von Nachrichten an die erste Kommunikationseinrichtung (2);
wobei zumindest eine ausgewählte Kommunikations- oder Einwegkommunikationseinrichtung (2, 3, 4, 5) eingerichtet ist, über ihren internen Sendeport (8 - 11) eine Prüfnachricht (PN) zu senden und an ihrem internen Empfangsport (12 - 15) die über die anderen Kommunikationseinrichtungen (2, 3) und Einwegkommunikationseinrichtungen (4, 5) intern zu der ausgewählten Kommunikations- oder Einwegkommunikationseinrichtung (2 - 5) zurück übertragene und mit Prüfdaten (II, SI) ergänzte Prüfnachricht (PN) zum Bestimmen eines Betriebszustands der Übertragungsvorrichtung (1) auszuwerten,
wobei die Kommunikations- und Einwegkommunikationseinrichtungen (2 - 5) derart mit Hilfe interner Kommunikationslinks (20 - 23) miteinander gekoppelt sind, dass eine jeweilige Prüfnachricht (PN) von allen anderen Kommunikations- oder Einwegkommunikationseinrichtungen (2 - 5) empfangen wird.

2. Übertragungsvorrichtung nach Anspruch 1,
**dadurch gekennzeichnet,**
**dass** zwischen einem jeweiligen internen Sendeport (8, 9, 10, 11) und einem jeweiligen internen Empfangsport (12, 13, 14, 15) einer der internen Kommunikationslinks (20, 21, 22, 23) als interner physischer Kommunikationslink angeordnet ist, welcher insbesondere in einer Übertragungsschicht, Schicht 1, gemäß dem OSI/ISO-Schichtenmodell ausgebildet ist.

3. Übertragungsvorrichtung nach Anspruch 2,
**dadurch gekennzeichnet,**
**dass** zumindest einer der internen Kommunikationslinks (20 - 23) als ein unidirektionaler Kommunikationslink, insbesondere nach einem Ethernet-Standard, einem SDI-Standard, eine physikalische Leiterverbindung, insbesondere eine optische Faserleitung und/oder eine Leiterbahn, ausgebildet ist.

4. Übertragungsvorrichtung nach einem der Ansprüche 1 bis 3, **dadurch gekennzeichnet,**
**dass** zumindest eine der Kommunikations- oder Einwegkommunikationseinrichtungen als eingebettete Prozessorkarte, insbesondere als System-on-Chip, insbesondere ARM-basiert, oder als ein Computer eingerichtet ist.

5. Übertragungsvorrichtung nach einem der Ansprüche 1 bis 4, **dadurch gekennzeichnet,**
**dass** jede Kommunikations- und Einwegkommunikationseinrichtung (2 - 5) eingerichtet ist, über ihren internen Sendeport (8 - 11) eine Prüfnachricht (PN) zu senden und an ihrem internen Empfangsport (12 - 15) die über die anderen Kommunikations- und Einwegkommunikationseinrichtungen (2 - 5) und internen Kommunikationslinks (20 - 23) zu der ausgewählten Kommunikations- oder Einwegkommunikationseinrichtung (2 - 5) aus den jeden Kommunikations- und Einwegkommunikationseinrichtungen (2 - 5) zurück übertragenen, und insbesondere mit Prüfdaten (II, SI) ergänzten, Prüfnachricht (PN) zum Bestimmen eines Betriebszustands der Übertragungsvorrichtung (1) auszuwerten.

6. Übertragungsvorrichtung nach Anspruch 5, ferner mit einer Zwischenspeichereinrichtung zum Speichern eines Auswerteergebnisses.

7. Übertragungsvorrichtung nach einem der Ansprüche 1 bis 6, **dadurch gekennzeichnet,**
**dass** die ausgewählte Kommunikations- oder Einwegkommunikationseinrichtung (2, 3, 4, 5) eingerichtet ist, eine jeweilige Prüfnachricht (PN) zu erzeugen, welche zumindest Identifizierungsinformation (II) zum Identifizieren der ausgewählten Kommunikations- oder Einwegkommunikationseinrichtung (2, 3, 4, 5) und/oder zumindest für die gesendete Prüfnachricht (PN) spezifische Prüfdaten (SI) umfasst.

8. Übertragungsvorrichtung nach einem der Ansprüche 1 bis 7, **dadurch gekennzeichnet,**
**dass** die ausgewählte Kommunikations- oder Einwegkommunikationseinrichtung (2 - 5) eingerichtet ist, die Prüfnachricht (PN) und/oder die Prüfdaten (II, SI) mit einer kryptographischen Prüfsumme zu versehen.

9. Übertragungsvorrichtung nach einem der Ansprüche 1 bis 8, **dadurch gekennzeichnet,**
**dass** zumindest eine der anderen Kommunikations- oder Einwegkommunikationseinrichtungen (2 - 5) eingerichtet ist, eine an ihrem internen Empfangsport (12 - 15) empfangene mit einer kryptographischen Prüfsumme versehene Prüfnachricht (PN) und/oder mit einer kryptographischen Prüfsumme versehene Prüfdaten (II, SI) mittels eines öffentlichen Schlüssels oder eines symmetrischen Schlüssels der ausgewählten Kommunikations- oder Einwegkommunikationseinrichtung (2 - 5), zu validieren.

10. Übertragungsvorrichtung nach einem der Ansprüche 1 bis 9, **dadurch gekennzeichnet,**
**dass** jede der anderen Kommunikations- oder Einwegkommunikationseinrichtungen (2 - 5) eingerichtet ist, einer empfangenen Prüfnachricht (PN) Prüfdaten (II, SI) hinzuzufügen, insbesondere eine der jeweiligen die Prüfnachricht (PN) empfangende Kommunikations- oder Einwegkommunikationseinrichtungen (2 - 5) zugeordnete Prüfdaten (SI) hinzuzufügen.

11. Übertragungsvorrichtung nach Anspruch 10, **dadurch gekennzeichnet,**
**dass** ausschließlich die ausgewählte Kommunikations- oder Einwegkommunikationseinrichtung (2, 3, 4, 5) als Master-Einrichtung eine Prüfnachricht (PN) erzeugt und versendet, wobei die anderen Kommunikations- oder Einwegkommunikationseinrichtungen (2 - 5) als Slave-Einrichtungen den jeweiligen empfangenen Prüfnachrichten (PN) Prüfdaten (II, SI) hinzufügen und diese weiterleiten.

12. Übertragungsvorrichtung nach einem der Ansprüche 1 bis 9, **dadurch gekennzeichnet,**
**dass** jede der anderen Kommunikations- oder Einwegkommunikationseinrichtungen (2 - 5) eingerichtet ist, eine empfangene Prüfnachricht (PN) ausschließlich weiterzuleiten.

13. Übertragungsvorrichtung nach einem der Ansprüche 1 bis 12, **dadurch gekennzeichnet,**
**dass** die ausgewählte Kommunikations- oder Einwegkommunikationseinrichtung (2, 3, 4, 5) eingerichtet ist, die Prüfnachricht (PN) zu vorgegebenen Zeitpunkten zu erzeugen und über ihren internen Sendeport (8 - 11) zu versenden, insbesondere bei einem Hochfahren der Übertragungsvorrichtung.

14. Übertragungsvorrichtung nach einem der Ansprüche 1 bis 13, **dadurch gekennzeichnet,**
**dass** die erste Einwegkommunikationseinrichtung (4) und die zweite Einwegkommunikationseinrichtung (5) als eine einzige Kommunikationseinrichtung integriert sind.

## Claims

1. Transmission apparatus (1) for transmitting data between a first network (NW1) and a second network (NW2), wherein the transmission apparatus (1) comprises:
a first communication device (2) having a first interface device (6) for coupling to the first network (NW1), an internal receiving port (12) for receiving messages and an internal sending port (8) for sending messages,
a second communication device (3) having a second interface device (7) for coupling to the second network (NW2), an internal receiving port (13) for receiving messages and an internal sending port (9) for sending messages,
a first one-way communication device (4) having an internal receiving port (14) for receiving messages from the first communication device (2) and an internal sending port (10) for sending messages to the second communication device (3); and
a second one-way communication device (5) having an internal receiving port (15) for receiving messages from the second communication device (3) and an internal sending port (11) for sending messages to the first communication device (2);
wherein at least one selected communication or one-way communication device (2, 3, 4, 5) is configured to send a test message (PN) via its internal sending port (8 - 11) and to evaluate, at its internal receiving port (12 - 15), the test message (PN) internally transmitted back to the selected communication or one-way communication device (2 - 5) via the other communication devices (2, 3) and one-way communication devices (4, 5) and supplemented with test data (II, SI) in order
to determine an operating state of the transmission apparatus (1),
wherein the communication and one-way communication devices (2 - 5) are coupled to each other by means of internal communication links (20 - 23) in such a way that a respective test message (PN) is received by all other communication or one-way communication devices (2 - 5).

2. Transmission apparatus according to Claim 1, **characterized**
**in that** one of the internal communication links (20, 21, 22, 23) is arranged as an internal physical communication link between a respective internal sending port (8, 9, 10, 11) and a respective internal receiving port (12, 13, 14, 15), which link is formed in particular in a physical layer, layer 1, according to the OSI/ISO layer model.

3. Transmission apparatus according to Claim 2, **characterized**
**in that** at least one of the internal communication links (20 - 23) is in the form of a unidirectional communication link, in particular according to an Ethernet standard, an SDI standard, a physical conductor connection, in particular an optical fibre line and/or a conductor track.

4. Transmission apparatus according to one of Claims 1 to 3, **characterized**
**in that** at least one of the communication or one-way communication devices is configured as an embedded processor card, in particular as a system-on-chip, in particular ARM-based, or as a computer.

5. Transmission apparatus according to one of Claims 1 to 4, **characterized**
**in that** each communication and one-way communication device (2 - 5) is configured to send a test message (PN) via its internal sending port (8 - 11) and to evaluate, at its internal receiving port (12 - 15), the test message (PN) transmitted back to the selected communication or one-way communication device (2 - 5) from each communication and one-way communication device (2 - 5) via the other communication and one-way communication devices (2 - 5) and internal communication links (20 - 23) and supplemented in particular with test data (II, SI) in order to determine an operating state of the transmission apparatus (1).

6. Transmission apparatus according to Claim 5, further comprising a buffer device for storing an evaluation result.

7. Transmission apparatus according to one of Claims 1 to 6, **characterized**
**in that** the selected communication or one-way communication device (2, 3, 4, 5) is configured to generate a respective test message (PN) which includes at least identification information (II) for identifying the selected communication or one-way communication device (2, 3, 4, 5) and/or at least test data (SI) specific to the test message (PN) sent.

8. Transmission apparatus according to one of Claims 1 to 7, **characterized**
**in that** the selected communication or one-way communication device (2 - 5) is configured to provide the test message (PN) and/or the test data (II, SI) with a cryptographic checksum.

9. Transmission apparatus according to one of Claims 1 to 8, **characterized**
**in that** at least one of the other communication or one-way communication devices (2 - 5) is configured to validate a test message (PN) and/or test data (II, SI) provided with a cryptographic checksum and received at its internal receiving port (12 - 15) by means of a public key or a symmetric key of the selected communication or one-way communication device (2 - 5).

10. Transmission apparatus according to one of Claims 1 to 9, **characterized**
**in that** each of the other communication or one-way communication devices (2 - 5) is configured to add test data (II, SI) to a received test message (PN), in particular to add test data (SI) associated with the respective communication or one-way communication devices (2 - 5) receiving the test message (PN).

11. Transmission apparatus according to Claim 10, **characterized in that** only the selected communication or one-way communication device (2, 3, 4, 5) as the master device generates and sends a test message (PN), wherein the other communication or one-way communication devices (2 - 5) as slave devices add test data (II, SI) to the respective received test messages (PN) and forward them.

12. Transmission apparatus according to one of Claims 1 to 9, **characterized**
**in that** each of the other communication or one-way communication devices (2 - 5) is configured to exclusively forward a received test message (PN).

13. Transmission apparatus according to one of Claims 1 to 12, **characterized**
**in that** the selected communication or one-way communication device (2, 3, 4, 5) is configured to generate the test message (PN) at predefined times and to send it via its internal sending port (8-11), in particular when the transmission apparatus is started up.

14. Transmission apparatus according to one of Claims 1 to 13, **characterized**
**in that** the first one-way communication device (4) and the second one-way communication device (5) are integrated as a single communication device.

## Revendications

1. Dispositif de transmission (1) pour la transmission de données entre un premier réseau (NW1) et un deuxième réseau (NW2), dans lequel le dispositif de transmission (1) comprend :
un premier dispositif de communication (2) avec un premier dispositif d'interface (6) pour le couplage au premier réseau (NW1), un port de réception interne (12) pour recevoir des messages et un port d'émission interne (8) pour envoyer des messages,
un deuxième dispositif de communication (3) avec un deuxième dispositif d'interface (7) pour le couplage au deuxième réseau (NW2), un port de réception interne (13) pour recevoir des messages et un port d'émission interne (9) pour envoyer des messages,
un premier dispositif de communication unidirectionnelle (4) avec un port de réception interne (14) pour recevoir des messages du premier dispositif de communication (2) et un port d'émission interne (10) pour envoyer des messages au deuxième dispositif de communication (3) ; et
un deuxième dispositif de communication unidirectionnelle (5) avec un port de réception interne (15) pour recevoir des messages du deuxième dispositif de communication (3) et un port d'émission interne (11) pour envoyer des messages au premier dispositif de communication (2) ;
dans lequel au moins un dispositif de communication ou de communication unidirectionnelle sélectionné (2, 3, 4, 5) est conçu pour émettre un message de test (PN) par l'intermédiaire de son port d'émission interne (8 - 11) et pour évaluer, au niveau de son port de réception interne (12 - 15), le message de test (PN), retransmis en interne au dispositif de communication ou de communication unidirectionnelle sélectionné (2 - 5) par l'intermédiaire des autres dispositifs de communication (2, 3) et des dispositifs de communication unidirectionnelle (4 - 5), et complété de données de test (II, SI), afin de déterminer un mode de fonctionnement du dispositif de transmission (1),
dans lequel les dispositifs de communication et de communication unidirectionnelle (2 - 5) sont couplés ensemble à l'aide de liens de communication internes (20 - 23) de manière telle qu'un test de message (PN) respectif est reçu par tous les autres dispositifs de communication ou de communication unidirectionnelle (2 - 5).

2. Dispositif de transmission selon la revendication 1, **caractérisé en ce qu'**entre un port d'émission interne respectif (8, 9, 10, 11) et un port de réception interne respectif (12, 13, 14, 15) est disposé l'un des liens de communication internes (20, 21, 22, 23) comme lien de communication physique interne, lequel est conçu plus particulièrement dans une couche de transmission, couche 1, selon le modèle de couches ISO/OSI.

3. Dispositif de transmission selon la revendication 2, **caractérisé en ce qu'**au moins l'un des liens de communication internes (20 - 23) est conçu comme un lien de communication unidirectionnel, plus particulièrement selon une norme Ethernet, une norme SDI, une connexion physique par conducteur, plus particulièrement une connexion par fibre optique et/ou une piste conductrice.

4. Dispositif de transmission selon l'une des revendications 1 à 3, **caractérisé en ce qu'**au moins l'un des dispositifs de communication ou de communication unidirectionnelle est conçu comme une carte de processeur intégrée, plus particulièrement comme un système sur puce, plus particulièrement basé sur ARM, ou comme un ordinateur.

5. Dispositif de transmission selon l'une des revendications 1 à 4, **caractérisé en ce que** chaque dispositif de communication et de communication unidirectionnelle (2 - 5) est conçu pour émettre un message de test (PN) par l'intermédiaire de son port d'émission interne (8 - 11) et pour évaluer, au niveau de son port de réception interne (12 - 15), le message de test (PN), retransmis au dispositif de communication ou de communication unidirectionnelle sélectionné (2 - 5) parmi tous les dispositifs de communication et de communication unidirectionnelle (2 - 5), par l'intermédiaire des autres dispositifs de communication et de communication unidirectionnelle (2 - 5) et des liens de communication internes (20 - 23), et plus particulièrement complété par des données de test (II, SI), afin de déterminer un état de fonctionnement du dispositif de transmission (1).

6. Dispositif de transmission selon la revendication 5, comportant en outre un dispositif de mémoire intermédiaire pour enregistrer un résultat d'évaluation.

7. Dispositif de transmission selon l'une des revendications 1 à 6, **caractérisé en ce que** le dispositif de communication ou de communication unidirectionnelle sélectionné (2, 3, 4, 5) est conçu pour produire un message de test (PN) respectif, lequel comprend au moins une information d'identification (II) pour identifier le dispositif de communication ou de communication unidirectionnelle sélectionné (2, 3, 4, 5) et/ou au moins des données de test spécifiques (SI) pour le message de test (PN) émis.

8. Dispositif de transmission selon l'une des revendications 1 à 7, **caractérisé en ce que** le dispositif de communication ou de communication unidirectionnelle sélectionné (2 - 5) est conçu pour doter le message de test (PN) et/ou les données de test (II, SI) d'une somme de contrôle cryptographique.

9. Dispositif de transmission selon l'une des revendications 1 à 8, **caractérisé en ce qu'**au moins l'un des autres dispositifs de communication ou de communication unidirectionnelle (2 - 5) est conçu pour valider un message de test (PN) doté d'une somme de contrôle cryptographique et/ou des données de test (II, SI) dotées d'une somme de contrôle cryptographique, reçu au niveau de son port de réception interne (12 - 15) au moyen d'une clé publique ou d'une clé symétrique du dispositif de communication ou de communication unidirectionnelle sélectionné (2 - 5).

10. Dispositif de transmission selon l'une des revendications 1 à 9, **caractérisé en ce que** chacun des autres dispositifs de communication ou de communication unidirectionnelle (2 - 5) est conçu pour ajouter des données de test (II, SI) à un message de test reçu (PN), plus particulièrement pour ajouter des données de test (SI) affectées à l'un des dispositifs de communication ou de communication unidirectionnelle (2 - 5) respectifs recevant le message de test (PN).

11. Dispositif de transmission selon la revendication 10, **caractérisé en ce que** seul le dispositif de communication ou de communication unidirectionnelle sélectionné (2, 3, 4, 5), en tant que dispositif maître, produit et émet un message de test (PN), dans lequel les autres dispositifs de communication ou de communication unidirectionnelle (2 - 5), en tant que dispositifs esclaves, ajoutent des données de test (II, SI) aux messages de test (PN) reçus respectifs et retransmettent ceux-ci.

12. Dispositif de transmission selon l'une des revendications 1 à 9, **caractérisé en ce que** chacun des autres dispositifs de communication ou de communication unidirectionnelle (2 - 5) est conçu exclusivement pour retransmettre un message de test (PN) reçu.

13. Dispositif de transmission selon l'une des revendications 1 à 12, **caractérisé en ce que** le dispositif de communication ou de communication unidirectionnelle sélectionné (2, 3, 4, 5) est conçu pour produire le message de test (PN) à des moments prédéfinis et l'émettre par l'intermédiaire de son port d'émission interne (8 - 11), plus particulièrement lors d'un démarrage du dispositif de transmission.

14. Dispositif de transmission selon l'une des revendications 1 à 13, **caractérisé en ce que** le premier dispositif de communication unidirectionnelle (4) et le deuxième dispositif de communication unidirectionnelle (5) sont intégrés comme un seul dispositif de communication.
